# EUROPÄISCHE PATENTSCHRIFT

(11) **EP 2 183 837 B1**
(45) Veröffentlichungstag und Bekanntmachung des Hinweises auf die Patenterteilung: **19.04.2017**
(21) Anmeldenummer: 08760078.9
(22) Anmeldetag: 27.05.2008
(51) Int. Cl.: H02K 5/22, H02K 3/52

(54) **ELEKTROMOTOR, INSBESONDERE STELL- ODER ANTRIEBSMOTOR IN KRAFTFAHRZEUGEN**
ELECTRIC MOTOR, IN PARTICULAR ACTUATOR MOTOR OR DRIVE MOTOR IN MOTOR VEHICLES
MOTEUR ÉLECTRIQUE, EN PARTICULIER MOTEUR DE COMMANDE OU D'ENTRAÎNEMENT DANS DES VÉHICULES AUTOMOBILES

(30) Priorität: 24.07.2007 DE 102007034327
(43) Veröffentlichungstag der Anmeldung: 12.05.2010
(73) Patentinhaber: Robert Bosch GmbH, 70442 Stuttgart (DE)
(72) Erfinder: KIMMICH, Peter, 71101 Schoenaich (DE); NGUYEN, Quoc-Dat, 72760 Reutlingen (DE)
(86) Internationale Anmeldenummer: PCT/EP2008/056480
(87) Internationale Veröffentlichungsnummer: WO 2009/013042

(56) Entgegenhaltungen:
- DE-A1- 19 624 145
- DE-A1- 19 727 165
- US-A1- 2003 173 839

## Beschreibung

Die Erfindung bezieht sich auf einen Elektromotor, insbesondere einen Stell- oder Antriebsmotor in Kraftfahrzeugen, nach dem Oberbegriff des Anspruches 1.

### Stand der Technik

In der DE 10 2005 059 162 A1 wird ein Elektromotor beschrieben, der als Asynchron- bzw. Synchronmotor ausgestaltet ist und für eine elektrische Servolenkung in einem Kraftfahrzeug eingesetzt werden kann. Der Elektromotor weist in einem Motorgehäuse ein Statorpaket mit einer Wicklung auf, die über einen Phasenstromanschluss mit Strom versorgt wird, wobei der Phasenstromanschluss durch den Gehäusedeckel des Motorgehäuses zu einem außen liegenden, gehäusefest angeordneten Steuergerät geführt ist. Dieses Steuergerät ist auf einem seitlich angeordneten Befestigungsträger gehalten, der sich parallel und mit Abstand zum Außenmantel des Motorgehäuses erstreckt und zusätzlich zur Trägerfunktion auch die Aufgabe hat, Verlustwärme des Motors und Wärme des Steuergerätes abzuleiten. Hierzu weist der als Kühlplatte ausgebildete Befestigungskörper eine hohe Wärmeleitfähigkeit und eine hohe Wärmekapazität auf.

Um den Phasenanschluss mit dem Steuergerät zu verbinden, ist in den Befestigungsträger eine Aussparung eingebracht, in die sich der Phasenstromanschluss erstreckt. In diese Aussparung, die sich über einen L-förmigen Winkelabschnitt des Befestigungskörpers erstreckt, sind auch Stromleitungen eingebracht, die den Phasenstromanschluss mit dem Steuergerät verbinden.

Die DE 197 27 165 A1 zeigt einen elektrischen Antriebsmotor in Außenläuferbauart mit einem innen liegenden Stator und einem umgreifenden, außen liegenden Rotor. Die Statorwicklung ist über eine Anschlussfahne, die ein elektrisches Anschlussteil bildet, zur Stromzufuhr mit einer Leistungselektronik auf einer Leiterplatte verbunden, welche sich auf der dem Rotor abgewandten Seite eines Trägers befindet, wobei der Träger Bestandteil eines Grundkörpers des Stators ist. Am Träger sind konzentrische Kühlrippen ausgebildet, um die in der Leistungselektronik auf der Leiterplatte entstehende Wärme abführen zu können. Die Anschlussfahne liegt seitlich an einem Abschnitt des Grundkörpers und ist in einen elektrisch isolierenden Körper eingebettet.

Die US 2003/0173839 A1 zeigt einen Elektromotor, welcher im Statorgehäuse eine Statorspule aufweist, die über einen elektrischen Anschluss bestrombar ist. Der elektrische Anschluss ist durch eine Ausnehmung in einem Gehäuseteil geführt und an einen Wechselstromanschluss mit einem Halbleiterschalter angeschlossen, wobei der Halbleiterschalter sich auf der Außenseite des Gehäuseteils befindet. Das Gehäuseteil ist außerdem Träger einer Kühleinheit, die in Form einzelner, als separate Bauteile ausgebildeter Lamellen ausgeführt ist, wobei die Lamellen der Kühleinheit in einem separaten Gehäuseraum angeordnet sind. Die Kühllamellen erstrecken sich senkrecht zur Ebene des plattenförmigen Gehäuseteils, in welches die Ausnehmung für das elektrische Anschlusssystem eingebracht ist.

### Offenbarung der Erfindung

Von diesem Stand der Technik ausgehend liegt der Erfindung die Aufgabe zugrunde, den Aufbau eines Elektromotors, der eine Kühlplatte und eine außen am Gehäuse angeordnete Motorelektronik aufweist, zu vereinfachen.

Diese Aufgabe wird erfindungsgemäß mit den Merkmalen des Anspruches 1 gelöst. Die Unteransprüche geben zweckmäßige Weiterbildungen an.

Der erfindungsgemäße Elektromotor, der insbesondere als Asynchronmotor (ASM) oder als Synchronmotor, vorzugsweise als permanenterregter Synchronmotor (PSM) ausgebildet ist, besitzt einen Stator in einem Statorgehäuse und einen rotierend gelagerten Rotor sowie eine innerhalb des Statorgehäuses angeordnete Spule, deren Wicklung über ein Anschlussleitungssystem bestrombar ist. Außerhalb des Statorinnenraumes ist eine Kühlplatte angeordnet, die als Verschluss des Motorgehäuses dient und auf deren Außenseite sich eine Trägerplatte für Motorelektronik befindet, an die das Anschlussleitungssystem angeschlossen ist. Erfindungsgemäß ist nun vorgesehen, dass das Anschlussleitungssystem durch eine Ausnehmung, die sich in der Kühlplatte befindet, von innen nach außen geführt und mit der Trägerplatte der Motorelektronik elektrisch verbunden ist. Diese Ausführung weist den Vorteil auf, dass das Anschlussleitungssystem in kürzestmöglicher Weise die Verbindung zwischen der Wicklung innerhalb des Statorgehäuses und der Trägerplatte auf der Außenseite der Kühlplatte schafft, so dass auch entsprechend einfach und kurz ausgeführte Anschlussleitungssysteme eingesetzt werden können. Dieser vereinfachte Aufbau verringert auch die Montagezeiten für den Elektromotor und erlaubt eine bessere Kontrolle sowie im Schadensfall eine leichtere Reparatur.

Gemäß einer vorteilhaften Weiterbildung ist vorgesehen, dass die Kühlplatte an einer Stirnseite des Motors angeordnet ist. Die Kühlplatte bildet in dieser Ausführung den Boden bzw. den Deckel bzw. ist mit einem gehäuseseitigen Boden bzw. Deckel verbunden. Grundsätzlich kommt aber auch eine Positionierung der Kühlplatte im Bereich des Umfanges des Elektromotors in Betracht.

Gemäß einer weiteren zweckmäßigen Ausführung bildet die Kühlplatte ein Gehäuseteil, wodurch eine optimale Wärmeableitung der im laufenden Betrieb entstehenden Abwärme des Elektromotors gewährleistet ist.

Erfindungsgemäß ist das Anschlussleitungssystem, insbesondere Stromschienen, welche Bestandteil des Anschlussleitungssystems sind, von einem gehäusefesten Trägerteil gehalten, das als elektrisch isolierender Kunststoffträger ausgebildet ist. Dieses Trägerteil ist über seine Funktion hinausgehend, das Anschlussleitungssystem aufzunehmen und zu halten, zugleich Träger der Kühlplatte.

Die Stromschienen als Bestandteil des Anschlussleitungssystems durchragen die Kühlplatte und sind entweder direkt mit der Trägerplatte verbunden, oder, gemäß einer weiteren vorteilhaften Ausführung, über einen Bond mit der Trägerplatte elektrisch verbunden, beispielsweise einem Bonddraht, der die elektrische Verbindung zwischen dem die Kühlplatte durchragenden Teil der Stromschienen und der Trägerplatte herstellt.

Die Verbindung zwischen den Stromschienen und dem Phasenstromanschluss innerhalb des Statorgehäuses kann auf unterschiedliche Arten durchgeführt werden. In Betracht kommt beispielsweise ein statorseitig angeordnetes Kontaktierelement, in welchem die Stromschienen und der Phasenstromanschluss zusammengeführt sind. Möglich ist aber auch eine durch Crimpen hergestellte Verbindung oder ein Zusammenschweißen von Stromschienen und Phasenstromanschluss.

Die erfindungsgemäße Ausführung eignet sich insbesondere für eine Anwendung in Elektromotoren, bei denen die Spule Bestandteil des Stators ist. In diesem Fall kann das Anschlussleitungssystem, insbesondere die Stromschienen, unmittelbar an die Wicklung angeschlossen werden. Grundsätzlich ist es aber auch möglich, das Anschlussleitungssystem über einen Kommutator elektrisch mit einem rotierenden Anker auf der Rotorwelle zu verbinden.

Als Elektromotoren kommen Wechsel- bzw. Drehstrommotoren in Betracht, beispielsweise permanenterregte Synchronmotoren (PSM) oder Asynchronmotoren (ASM). Grundsätzlich ist aber auch eine Ausführung als Gleichstrommotor möglich.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Elektromotor mit einem im Stator- bzw. Motorgehäuse aufgenommenen Rotor und einem Statorpaket, das eine bestrombare Spule umfasst, die über ein Anschlussleitungssystem durch eine stirnseitige Kühlplatte hindurchgeführt ist, wobei das Anschlussleitungssystem elektrisch mit einer Trägerplatte für Motorelektronik verbunden ist,
- Fig. 2: ein Elektromotor in einer weiteren Ausführung, bei der die Verbindung zwischen der Wicklung des Statorpakets und dem Anschlussleitungssystem in einer geänderten Ausführung realisiert ist.

In den Figuren sind gleiche Bauteile mit gleichen Bezugszeichen versehen.

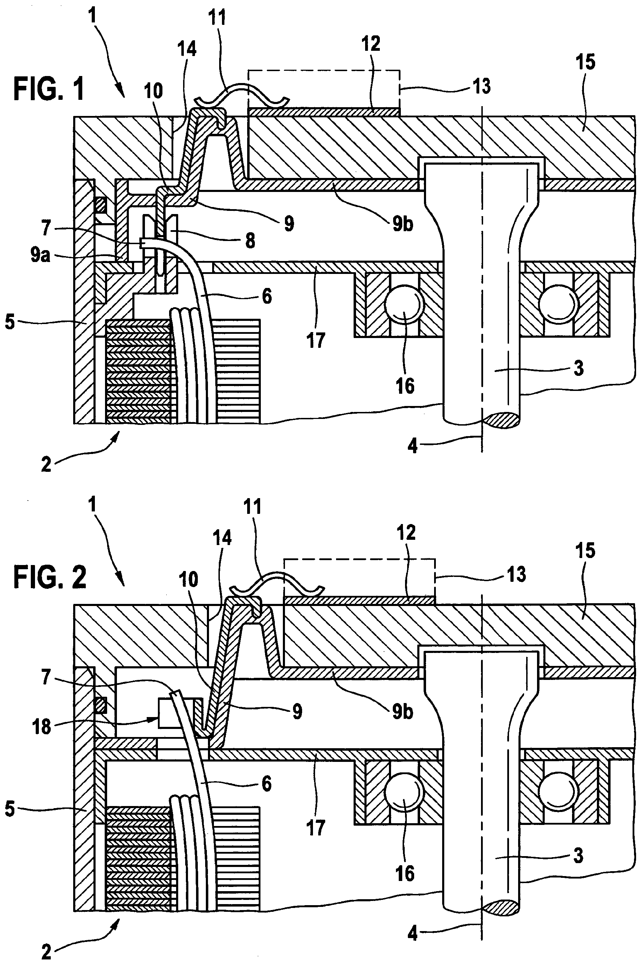

Bei dem in Fig. 1 dargestellten Elektromotor 1 handelt es sich um einen Asynchronmotor (ASM) oder einen permanenterregten Synchronmotor (PSM), vorzugsweise einen Stell- oder Antriebsmotor in einem Kraftfahrzeug. Der Elektromotor 1 weist einen Stator im Motor- bzw. Statorgehäuse 5 und einen darin drehbar gelagerten Rotor auf, bestehend aus einer Rotorwelle 3 und einem in der Figur nicht dargestellten Rotorpaket. Der Stator umfasst ein gehäusefestes Statorpaket 2, das eine Spule mit einer elektrisch bestrombaren Wicklung 6 aufweist, die über einen Phasenstromanschluss 7 mit einer Stromschiene 10 elektrisch verbunden ist. Die Verbindung zwischen Phasenstromanschluss 7 und Stromschiene 10 erfolgt in einem Kontaktierelement 8, das an der Innenwand des Statorgehäuses 5 befestigt ist und vorteilhafterweise eine Nut zur Aufnahme des Phasenstromanschlusses 7 und/oder des Endabschnitts der Stromschiene 10 aufweist.

Die Stromschiene 10 ist von einem Trägerteil gehalten, das als elektrisch isolierender Kunststoffträger 9 ausgebildet und fest mit dem Statorgehäuse 5 verbunden ist. Der Kunststoffträger 9 liegt an der Innenseite des Statorgehäuses 5 an und erstreckt sich mit einem Abschnitt 9a parallel zur Seitenwand, welche achsparallel zur Rotorachse 4 der Rotorwelle 3 verläuft, und mit einem weiteren Abschnitt 9b an der Innenseite einer Kühlplatte 15, welche an der Stirnseite des Elektromotors angeordnet ist und einen Teil des Stator- bzw. Motorgehäuses 5 bilden kann; der Abschnitt 9b des Kunststoffträgers 9 trägt bzw. stützt die Kühlplatte 15. Ein mittlerer Abschnitt des Kunststoffträgers 9 erstreckt sich durch eine Ausnehmung 14, die in die Kühlplatte 15 eingebracht ist.

Die Kühlplatte 15 besteht zweckmäßigerweise aus einem Material mit hoher Wärmeleitfähigkeit und hoher Wärmekapazität, insbesondere aus Metall, und dient zur Kühlung unter anderem der im laufenden Betrieb entstehenden Abwärme des Elektromotors. Darüber hinaus ist die Kühlplatte 15 Träger eines auf einer Trägerplatte 12 angeordneten Steuergerätes 13, das ebenfalls von der Kühlplatte gekühlt wird.

Die Ausnehmung 14 in der Kühlplatte 15 erstreckt sich vollständig durch die Wandung der Kühlplatte und verbindet das Statorinnere mit der Umgebung. Durch die in Achsrichtung verlaufende Ausnehmung 14 ist der Kunststoffträger 9 geführt einschließlich der am Kunststoffträger 9 gehaltenen Stromschiene 10. Auf der Außenseite der Kühlplatte 15 ist ein durch die Ausnehmung 14 hindurch geführter Abschnitt der Stromschiene 10 über einen Bonddraht 11 elektrisch mit der Trägerplatte 12 bzw. dem Steuergerät 13 verbunden. Damit ist der elektrische Kontakt bzw. die elektrische Versorgung der Wicklung 6 des Statorpaketes 2 mit dem Steuergerät 13 bzw. einer Stromversorgungsquelle hergestellt.

Zur Lagerung der Rotorwelle 3 ist ein Drehlager 16 im Statorgehäuse 5 vorgesehen, das an einem Träger 17 gehalten ist, welcher gehäusefest angeordnet ist und sich parallel zum Abschnitt 9b erstreckt, der an der Innenwandung der Kühlplatte 15 anliegt.

In Fig. 2 ist ein weiteres Ausführungsbeispiel für einen Elektromotor 1 dargestellt, der im Prinzip demjenigen nach Fig. 1 entspricht, so dass insoweit auf die dortige Beschreibung verwiesen wird. Im Unterschied zu Fig. 1 ist aber die Verbindung zwischen dem Phasenstromanschluss 7 und der Stromschiene 10, die durch die Ausnehmung 14 in der Kühlplatte 15 geführt ist, in einer alternativen Weise realisiert. Hierzu ist die Verbindung 18 als Crimpverbindung ausgeführt, bei der der Phasenstromanschluss 7 und die Stromschiene 10 durch plastische Verformung miteinander verbunden werden. Alternativ zur Crimpverbindung kommt auch eine Schweißverbindung in Betracht.

## Patentansprüche

1. Elektromotor, insbesondere Stell- oder Antriebsmotor in Kraftfahrzeugen, mit einem Stator und einem rotierend gelagerten Rotor, mit einer innerhalb des Statorgehäuses (5) angeordneten Spule, deren Wicklung (6) über ein Anschlussleitungssystem (10) zu bestromen ist, und mit einer außerhalb des Statorinnenraumes angeordneten Kühlplatte (15), auf deren Außenseite eine Trägerplatte (12) für Motorelektronik angeordnet ist, an die das Anschlussleitungssystem (10) angeschlossen ist,
**dadurch gekennzeichnet, dass** die Kühlplatte (15) als Verschluss des Statorgehäuses (5) dient und das elektrische Anschlussleitungssystem (10) durch eine Ausnehmung (14) in der Kühlplatte (15) von innen nach außen geführt und mit der Trägerplatte (12) elektrisch verbunden ist, dass das Anschlussleitungssystem eine Stromschiene (10) umfasst, die innerhalb des Statorgehäuses (5) mit einem Phasenstromanschluss (7) verbunden ist, der mit der Wicklung (6) der Spule elektrisch leitend verbunden ist, dass die Stromschiene (10) durch die Ausnehmung (14) in der Kühlplatte (15) geführt ist, und dass das Anschlussleitungssystem (10) an einem gehäusefesten Trägerteil (9) gehalten ist, das als elektrisch isolierender Kunststoffträger (9) ausgebildet ist, wobei das Trägerteil (9) zugleich Träger der Kühlplatte (15) ist.

2. Elektromotor nach Anspruch 1,
**dadurch gekennzeichnet, dass** die Kühlplatte (15) an einer Stirnseite des Motors (1) angeordnet ist.

3. Elektromotor nach Anspruch 1 oder 2,
**dadurch gekennzeichnet, dass** die Kühlplatte (15) ein Gehäuseteil bildet.

4. Elektromotor nach einem der Ansprüche 1 bis 3,
**dadurch gekennzeichnet, dass** die Stromschiene (10) auf der Außenseite der Kühlplatte (15) über einen Bonddraht (11) mit der Trägerplatte (12) verbunden ist.

5. Elektromotor nach einem der Ansprüche 1 bis 4,
**dadurch gekennzeichnet, dass** die Stromschiene (10) und der Phasenstromanschluss (7) in einem statorfesten Kontaktierelement (8) zusammengeführt sind.

6. Elektromotor nach einem der Ansprüche 1 bis 5,
**dadurch gekennzeichnet, dass** die Stromschiene (10) und der Phasenstromanschluss (7) zusammengecrimpt sind.

7. Elektromotor nach einem der Ansprüche 1 bis 6,
**dadurch gekennzeichnet, dass** die Stromschiene (10) und der Phasenstromanschluss (7) zusammengeschweißt sind.

8. Elektromotor nach einem der Ansprüche 1 bis 7,
**dadurch gekennzeichnet, dass** die Spule Bestandteil des Stators ist.

9. Elektromotor nach einem der Ansprüche 1 bis 8,
**gekennzeichnet durch** eine Ausführung als permanenterregter Synchronmotor (PSM).

10. Elektromotor nach einem der Ansprüche 1 bis 8,
**gekennzeichnet durch** eine Ausführung als Asynchronmotor (ASM).

11. Elektromotor nach einem der Ansprüche 1 bis 8,
**gekennzeichnet durch** eine Ausführung als Gleichstrommotor.

## Claims

1. Electric motor, in particular actuating or drive motor in motor vehicles, comprising a stator and a rotatably mounted rotor, comprising a coil which is arranged within the stator housing (5) and the winding (6) of which is to be supplied with current by means of a connection line system (10), and comprising a cooling plate (15) which is arranged outside the stator interior and on the outer side of which a support plate (12) for motor electronics is arranged, the connection line system (10) being connected to the said support plate, **characterized in that** the cooling plate (15) serves as a closure of the stator housing (5) and the electrical connection line system (10) is routed from the inside to the outside through a recess (14) in the cooling plate (15) and is electrically connected to the support plate (12), **in that** the connection line system comprises a busbar (10) which is connected to a phase current connection (7), which is electrically conductively connected to the winding (6) of the coil, within the stator housing (5), **in that** the busbar (10) is routed through the recess (14) in the cooling plate (15), and **in that** the connection line system (10) is held on a support part (9) which is fixed to the housing and which is in the form of an electrically insulating plastic support (9), wherein the support part (9) is, at the same time, a support for the cooling plate (15).

2. Electric motor according to Claim 1, **characterized in that** the cooling plate (15) is arranged on an end side of the motor (1).

3. Electric motor according to Claim 1 or 2, **characterized in that** the cooling plate (15) forms a housing part.

4. Electric motor according to one of Claims 1 to 3, **characterized in that** the busbar (10) is connected to the support plate (12) by means of a bonding wire (11) on the outer side of the cooling plate (15).

5. Electric motor according to one of Claims 1 to 4, **characterized in that** the busbar (10) and the phase current connection (7) are combined in a contact-making element (8) which is fixed to the stator.

6. Electric motor according to one of Claims 1 to 5, **characterized in that** the busbar (10) and the phase current connection (7) are crimped together.

7. Electric motor according to one of Claims 1 to 6, **characterized in that** the busbar (10) and the phase current connection (7) are welded together.

8. Electric motor according to one of Claims 1 to 7, **characterized in that** the coil is a constituent part of the stator.

9. Electric motor according to one of Claims 1 to 8, **characterized by** a design as a permanent-magnet synchronous motor (PSM).

10. Electric motor according to one of Claims 1 to 8, **characterized by** a design as an asynchronous motor (ASM).

11. Electric motor according to one of Claims 1 to 8, **characterized by** a design as a DC motor.

## Revendications

1. Moteur électrique, notamment servomoteur ou moteur d'entraînement dans des véhicules automobiles, comprenant un stator et un rotor monté en rotation, comprenant une bobine disposée à l'intérieur du carter de stator (5), dont l'enroulement (6) peut être alimenté électriquement par le biais d'un système de ligne de raccordement (10), et comprenant une plaque de refroidissement (15) disposée à l'extérieur de l'espace intérieur du stator, sur la surface extérieure de laquelle est disposée une plaque porteuse (12) pour l'électronique du moteur, à laquelle est raccordé le système de ligne de raccordement (10),
**caractérisé en ce que** la plaque de refroidissement (15) sert de fermeture du carter de stator (5) et le système de ligne de raccordement (10) électrique est acheminé de l'intérieur vers l'extérieur à travers une cavité (14) dans la plaque de refroidissement (15) et est relié électriquement à la plaque porteuse (12), **en ce que** le système de ligne de raccordement (10) comprend une barre-bus qui est reliée à l'intérieur du carter de stator (5) à une borne de courant de phase (7), laquelle est reliée de manière électriquement conductrice à l'enroulement (6) de la bobine, **en ce que** la barre-bus (10) passe à travers la cavité (14) dans la plaque de refroidissement (15), et **en ce que** le système de ligne de raccordement (10) est maintenu à une partie porteuse (9) solidaire du carter, laquelle est réalisée sous la forme d'un support en matière plastique (9) électriquement isolant, la partie porteuse (9) étant en même temps le support de la plaque de refroidissement (15).

2. Moteur électrique selon la revendication 1, **caractérisé en ce que** la plaque de refroidissement (15) est disposée sur un côté frontal du moteur (1).

3. Moteur électrique selon la revendication 1 ou 2, **caractérisé en ce que** la plaque de refroidissement (15) forme une partie de carter.

4. Moteur électrique selon l'une des revendications 1 à 3, **caractérisé en ce que** la barre-bus (10) est reliée à la plaque porteuse (12) par le biais d'un fil de connexion (11) sur le côté extérieur de la plaque de refroidissement (15).

5. Moteur électrique selon l'une des revendications 1 à 4, **caractérisé en ce que** la barre-bus (10) et la borne de courant de phase (7) se rejoignent dans un élément de contact (8) solidaire du stator.

6. Moteur électrique selon l'une des revendications 1 à 5, **caractérisé en ce que** la barre-bus (10) et la borne de courant de phase (7) sont serties ensemble.

7. Moteur électrique selon l'une des revendications 1 à 6, **caractérisé en ce que** la barre-bus (10) et la borne de courant de phase (7) sont soudées ensemble.

8. Moteur électrique selon l'une des revendications 1 à 7, **caractérisé en ce que** la bobine fait partie intégrante du stator.

9. Moteur électrique selon l'une des revendications 1 à 8, **caractérisé par** une exécution sous la forme d'un moteur synchrone à excitation permanente (PSM).

10. Moteur électrique selon l'une des revendications 1 à 8, **caractérisé par** une exécution sous la forme d'un moteur asynchrone (ASM).

11. Moteur électrique selon l'une des revendications 1 à 8, **caractérisé par** une exécution sous la forme d'un moteur à courant continu.
